(19) Europäisches Patentamt
European Patent Office
Office européen des brevets

(11) **EP 3 839 436 A1**

(12) **EUROPEAN PATENT APPLICATION**

(43) Date of publication:
**23.06.2021 Bulletin 2021/25**

(51) Int Cl.:
**G01C 21/34** *(2006.01)* **B60W 20/00** *(2016.01)*

(21) Application number: **19219011.4**

(22) Date of filing: **20.12.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **XYZ Dynamics Beheer B.V.**
**5334 LJ Velddriel (NL)**

(72) Inventor: **van der Horst, Diego**
**5327 AM Hurwenen (NL)**

(74) Representative: **Michalski Hüttermann & Partner Patentanwälte mbB**
**Speditionstraße 21**
**40221 Düsseldorf (DE)**

(54) **EMISSION ADAPTED CHARGING CONTROL FOR HYBRID VEHICLES**

(57)     The present invention relates to a method for a route dependent charging control of hybrid vehicles comprising a combustion engine and a battery-operated electric engine via a control device, wherein the method at least comprises the steps of a) user input of a destination at a vehicle start position into the memory of a navigation module; b) determination of the actual vehicle position by a positioning device and download of route alternatives starting from the actual position to the final destination from a storage medium to the navigation module; c) segmentation of the route in the navigation module at least as a function of the area specific pollution requirements and calculation of a necessary active charging input-level; d) comparison of the calculated necessary active charging input-level to a pre-defined active charging input-range; e) based on the comparison outcome in step d), following the selected route alternative in cases, wherein the calculated necessary active charging input-levels of all segments are within the limits of the pre-defined active charging input-ranges or performing an action by the control device in cases, wherein segments are present, wherein the calculated necessary active charging input-level is not within the limits of the pre-defined active charging input-ranges, wherein the method steps b)-e) are at least performed more than once along the route from the start position to the final destination. In addition, the present invention relates to a control system adapted to perform the inventive method and a hybrid car comprising the inventive control system.

**Figure 1**

**Description**

The present invention relates to a method for a route dependent charging control of hybrid vehicles comprising a combustion engine and a battery-operated electric engine via a control device, wherein the method at least comprises the steps of a) user input of a destination at a vehicle start position into the memory of a navigation module; b) determination of the actual vehicle position by a positioning device and download of route alternatives starting from the actual position to the final destination from a storage medium to the navigation module; c) segmentation of the route in the navigation module at least as a function of the area specific pollution requirements and calculation of a necessary active charging input-level; d) comparison of the calculated necessary active charging input-level to a pre-defined active charging input-range; e) based on the comparison outcome in step d), following the selected route alternative in cases, wherein the calculated necessary active charging input-levels of all segments are within the limits of the pre-defined active charging input-ranges or performing an action by the control device in cases, wherein segments are present, wherein the calculated necessary active charging input-level is not within the limits of the pre-defined active charging input-ranges, wherein the method steps b)-e) are at least performed more than once along the route from the start position to the final destination. In addition, the present invention relates to a control system adapted to perform the inventive method and a hybrid car comprising the inventive control system.

Albeit the constant progress in the efficiency and ecological friendliness of vehicles in the last years, it has still remained a major challenge in private transport, to assure the right balance between individual mobility, common health requirements and the protection of the environment. This balance is especially vital for internal combustion engine (ICE) based vehicles, wherein common optimization strategies targeted the performance of the engines and the vehicle, inter alia including the optimization of the motor management or different kinds of catalytic exhaust gas converters. A different approach led to vehicles comprising other power systems, wherein the necessary energy is not generated by the combustion of carbon-based fuels in the vehicle but supplied by an electric battery. In addition, in-between "hybrid" solutions are nowadays present, wherein electric- and combustion-based power systems are integrated in the vehicle at the same time. The latter approach should be able to integrate the best of both worlds, resulting in higher efficiencies and lower emission levels. Unfortunately, this concept suffers from the drawback, that the integral efficiency is also a function of the driving behavior. Based on the fact that the combustion engine presents always an easy fallback position, it is not necessarily the case, that the battery, as power source, is plug-in charged before driving or that the electric engine is used at all. Therefore, existing and/or newly produced series of parallel type hybrid vehicles are currently expected not to be allowed to enter emission regulated zones, because series and/or parallel type hybrid powertrain control methods, do not comply with upcoming or existing legislation in these zones. The main problem here is, that the current vehicle control methods cannot assure to take the area specific emission side-conditions into account. Although hybrid vehicles, in principle, would be able to travel at zero or near-zero emission levels by controlling the interplay of internal combustion and electric engine, this regulation specific interplay is not established at the moment. In addition, it is key for such vehicle-types to be charged sufficiently by use of a plug-in charging system. The eco-balance is also shifted, if the vehicle is not charged using the plug-in charging system but the combustion engine, only. In such cases the emissions rise, due to the added weight of the electric system and the advantages of a hybrid vehicle are not utilized at all.

Several approaches and technical concepts can be found in the literature to improve the performance and eco-friendliness of hybrid vehicles.

DE 10 2008 008 238 A1 for instance describes a method for a charging strategy of an a hybrid drive based on an internal combustion engine, an electric machine and a battery, comprising at least one control device, the control device includes various charging and discharging functions for the battery, wherein depending on various input parameter the control device selects one of the various charging or discharging functions, wherein the selected charging or discharging function is controlled via a load point shift in the combustion and electric machine, wherein the input parameter includes at least the difference between an actual SOC-value (state of charge) and a target SOC-value.

US 2005 021 191 A1 discloses an environment conservation contribution system using a vehicle, the system comprising: certain generating means disposed in the vehicle for executing regenerative generation; electric power accumulating means disposed in the vehicle for accumulating electric power owing to at least the regenerative generation executed by the certain generating means and for functioning as a supply source of operational electric power for an electric load disposed in the vehicle; regenerative generation determining means disposed in the vehicle for monitoring a state of the vehicle and for determining whether the regenerative generation executed by the certain generating means is allowed under the state monitored; generation controlling means disposed in the vehicle for causing the certain generating means to execute the regenerative generation when the regenerative generation is determined to be allowed under the state monitored; and data providing means disposed in the vehicle for providing, to a managing center outside the vehicle, regeneration data corresponding to the regenerative generation executed.

Nevertheless, besides the existing solutions in the field of plugin hybrid electric vehicles (PHEV), there still exists the need for further methods, which are able to establish an improved interplay between the usage of the combustion and the electric engine and, consequently, are able to achieve lower emission levels and a more energy efficient driving.

Therefore, the present invention has the object of solving the shortcomings of the prior art by provision of an improved power control method for plugin hybrid electric vehicles according to claim 1. Furthermore, the present invention has the object of solving the shortcomings of the prior art, at least in part, by provision of a control system for plugin hybrid electric vehicles according to claim 11 and provision of plugin hybrid electric vehicles comprising said control system according to claim 15.

Therefore, a method for a route dependent charging control of a hybrid vehicle comprising a combustion engine and a battery-operated electric engine is within the scope of invention, wherein the vehicle is equipped to actively re-charge the battery by utilization of the combustion engine power output, wherein the method is performed at least in part in a control device, wherein the control device is equipped to adapt the active charging input into the battery by the combustion engine and equipped to adapt the available torque output of the vehicle engines and comprises a memory including instructions to perform at least the method steps of:

a) user input of a destination at a vehicle start position into the memory of a navigation module;

b) determination of the actual vehicle position by a positioning device and download of route alternatives starting from the actual position to the final destination from a storage medium to the navigation module, wherein in addition to the different route alternatives at least also the area specific pollution requirements are stored in the navigation module;

c) segmentation of the route in the navigation module at least as a function of the area specific pollution requirements and calculation of a necessary active charging input-level for each route segment, wherein the necessary active charging input-level is calculated including one or more factors from the group consisting of travelled distance in the segment; actual and predicted battery charge status before entering the segment; location, extent and travel distance in emission-limited zones; location, extent and travel distance in zero-emission zones; traffic conditions; weather conditions; predicted overall route dependent pollution output; current and long-term plug-in charging level;

d) comparison of the calculated necessary active charging input-level in step c) for each segment to a pre-defined active charging input-range stored in the memory of the control device, wherein the pre-defined active charging input-ranges are at least a function of the allowable vehicle emission output;

e) based on the comparison outcome in step d), following a selected route alternative in cases, wherein the calculated necessary active charging input-levels of all segments are within the limits of the pre-defined active charging input-ranges or performing an action by the control device in cases, wherein segments are present, wherein the calculated necessary active charging input-level is not within the limits of the pre-defined active charging input-ranges, wherein the requested action is selected from the group consisting of planning of a different route, adapting the necessary active charging input-levels of segments prior to the out-of-range segment, adapting the pre-defined active charging input-range in the memory of the control device, electronically limiting the available vehicle torque output of the vehicle, output of a user information on a vehicle communication device, output of a user plug-in charging request on a vehicle communication device; platooning of several vehicles in one or more segments; wherein the method steps b)-e) are at least performed more than once along the route from the start position to the final destination.

Surprisingly, it was found that above described method is able to provide a lower emission rate and a higher energy efficient driving per route compared to the state-of-the-art control systems for plug-in hybrid vehicles. Based on the proposed method steps it is possible to assure, that the emission requirements in emission-limited zone are fulfilled and, consequently, that hybrid vehicles can enter these zones. Therefore, shorter alternative routes can be provided, resulting in an overall reduction of emissions per route. Furthermore, based on the established technical dependence between utilization of the combustion engine and the battery, it is possible to generate the right battery status for efficient, e.g. shorter, alternative routes and, accordingly, emissions can be avoided. This is especially true for areas, wherein the pollution level is already high. Furthermore, based on the requested steps it is possible, to shift the charging to higher levels of plug-in charging, which comprises a higher energy efficiency and is pollution friendly. These effects are at least in part based on the limits of the active charging ranges, which are, according to the invention, not freely or randomly choose able. The ranges establish the possibility to optimize the generation of the necessary energy amount to enable a more balanced energy distribution between the different sources and, therefore, enables lower emissions. In addition, besides the technical effect based on the established charging relation between combustion engine and battery, a user behavior is also targeted to perform the right steps, resulting in a better overall charging behavior and, consequently, lower emissions and shorter routes. The proposed inventive method solves above mentioned problems also by motivating/forcing the vehicle user in various ways to charge the vehicle using the plug-in charging system. The latter effect is based on various data, such as location and route information, but also local emission limits based on legislative limits and generated insights of the current fleet in a certain area, thereby reducing the emissions of current and future hybrid vehicles next to assuring government agencies that legislative emission limits are always respected. Furthermore, the proposed system can limit active regeneration in order to reduce increased emissions due to active regeneration. This assures that the emissions are not simply "moved" to a different location, being the case if the user only makes use of active regeneration instead of plug-in charging.

The inventive method is a method for a route dependent charging control of a hybrid vehicle comprising a combustion engine and a battery-operated electric engine. The inventive method alters the charging behavior of a hybrid vehicle as a function of the route requirements. Based on the legislation in certain areas of the route, it might be possible that emission limits are in place, wherein the pollution generated by the vehicle is restricted to certain levels. The charging of the battery by the combustion engine is optimized, wherein by this optimization it is possible to fulfill the pollution requirements in such areas. This goal is achieved by actively considering these routes in the overall pool of possible routes and controlling the interplay of combustion engine and battery in and before entering the areas. A route includes the geographic path information from a starting point or actual position to a destination, including the in between path points. Vehicles according the invention are hybrid vehicles like for instance cars or busses.

The vehicle is equipped to actively re-charge the battery by utilization of the combustion engine power output. The battery-operated electric engine of the hybrid vehicle may either be charged by plug-in charging, i.e. by an external, not vehicle bound electric power source, or the battery may alternatively be charged by an on-board transformation device, transforming the mechanical energy generated by the combustion machine into electricity and storing the electricity into the vehicle battery. The latter is called active re-charging, because additional fuel is consumed for generating the charging electricity, which is stored in the battery. The vehicle may charge electric energy when driving at a constant speed. The electric drive-train generates a negative torque request and, consequently, the overall fuel consumption will rise. This active is different to passive charging, wherein the vehicle regenerates the kinetic energy back to electric energy in the course of braking.

The method is performed at least in part in a control device, wherein the control device is equipped to adapt the active charging input into the battery by the combustion engine and equipped to adapt the available torque output of the vehicle engines and comprises a memory including instructions to perform the inventive steps. The inventive method can be performed at all or just in certain method steps within a control device. In cases, wherein only some method steps are performed in the control device it is possible, that the other method steps are performed in other vehicle devices. For instance, it is possible that the functionality of certain already present vehicle on-board units, like a navigation device, GPS- or communication devices, are integrated into the inventive method and the necessary methods steps are controlled by, but not executed in the control device. This may, for instance, be the case, when the control device includes a memory, comprising instructions, when executed are able to perform the necessary method steps. Nevertheless, the control device is able to communicate with the vehicle systems, for instance an ECU (engine control unit), and is able to up- or down-regulate the requests for producing electrical energy for battery charging. For instance, it is possible that the control unit request to re-charge the battery at the highest possible technical level or it is possible, that the control unit requests, that no extra fuel is spend for active battery re-charging. These control steps may be performed as a function of time, as a function of the location or as a combination of both factors. In addition, the control unit is at least able to control the available overall torque output of the vehicle. Therefore, the control unit is able to restrict the overall acceleration capabilities of the vehicle. For instance, it is possible that the available torque in Nm is restricted just to 50% with respect to the technical possible torque. Such feature may be achieved by a control command of the control unit to the ECU or by a direct command from the control unit to the gear or engine system. The restriction in the torque may be achieved by restriction of the torque output of the electric, the combustion or both engine types.

The control unit comprises a memory including instructions to perform the inventive steps. The memory may physically be present within the control unit or the memory may be physically located outside of the control unit, but electronically connected to the control unit. For instance, it is possible that the memory forms a part of the memory of already existing vehicle systems comprising a memory. Nevertheless, the memory within these other vehicle systems is designated at least temporarily to the memory of the control device.

In method step a) the user inputs a destination at a vehicle start position into the memory of a navigation module. The navigation module may be physically a part of the control device or may be physically separated from the control device, but electronically connected. The navigation module may for instance be a navigation system already being a part of the vehicle electronics. It is also possible, that the navigation module and the control device share a part of the same memory or that a certain memory operation can be performed by the control device. The start position of the vehicle is the starting point of the trip and at the starting point already the target destination is defined by the user or driver. This location can be different to in-between locations, e.g. wherein the vehicle stops. These in-between positions differ with respect to the starting point, in that no new destination is inputted in the memory.

In method step b) the actual vehicle position is determined by a positioning device and route alternatives from the actual position to the final destination are downloaded from a storage medium to the navigation module, wherein in addition to the different route alternatives at least also the area specific pollution requirements are stored in the navigation module. The actual vehicle position can be the starting position or an in-between location of the vehicle. The map location of the vehicle is determined via a positioning device, for instance a GPS-device or system. The positioning device and or the navigation module may completely or partially be integrated into the control device or may be electronically connected. Therefore, it is possible that some of the operations are physically performed by an already build-in vehicle navigation system. Within this method step the information regarding the possible route alternatives from the actual position to the final destination are downloaded from a storage medium. The storage medium may be a permanent or temporary memory like a disc and the medium can be located in the vehicle. It is also possible, that the storage medium is a cloud server and the information are downloaded via a communication link between the server and the vehicle. Besides different route alternatives, the acquired data may also include information regarding the location, the extent and the allowed level of pollution as a function of the planned route. For instance, additional pollution specific information may be present, that the route alternative does not include any streets, wherein pollution limits apply. It may also be the case, that in-between the path from the actual to the final destination pollution unrestricted streets and one or more emission restricted zones are present, wherein in the latter only vehicles are allowed comprising a pollution level below a certain pollution or exhaust gas threshold (e.g. x mg $CO_2$/km).

In method step c) the route in the navigation module is segmented at least as a function of the area specific pollution requirements and a necessary active charging input-level is calculated for each route segment, wherein the necessary active charging input-level is calculated including one or more factors from the group consisting of travelled distance in the segment; actual and predicted battery charge status before entering the segment; location, extent and travel distance in emission-limited zones; location, extent and travel distance in zero-emission zones; traffic conditions; weather conditions; predicted overall route dependent pollution output; current and long-term plug-in charging level. Based on a given route alternative, including a possible path from the current position to the final destination, the overall path is divided into different path segments, based on the emission regulation of the segments. In cases, wherein all streets of the route alternative comprise only one common pollution or emission level, for instance zero emission or no restriction, only one segment can be generated. If different pollution requirements apply, at least two different segments are generated, wherein each segment comprises streets comprising the same pollution requirements. Besides the pollution specific requirements, it is also possible that other requirements can be taken into account, e.g. fuel efficiency of the chosen road, calculated starts-stop on the segments, constant driving speed etc..

For each segment a necessary active charging input-level is calculated. The active charging input-level determines the amount of active charging of the battery by the combustion engine. For instance, if within a certain segment no emissions are allowed, it is necessary that the battery comprises enough energy to allow the vehicle to pass that zero-emission zone without any energy from the combustion engine. Therefore, the necessary charge level of the battery has to be already present at the actual position or has to be generated in following segments, where such limitation does not apply. The necessary active charging input-levels are therefore calculated as a function of the overall route requirements and calculated and/stored for each segment. Besides considering the regulated pollution levels, only, also other factors mentioned above might be included into the calculation in order to also include other emission and fuel consumption relevant factors.

The active charging input-level can also be communicated to the user or set by the user in various ways based on various variables. An option is to let the user know how much electric energy is regenerated during driving on the internal combustion engine. For example, by showing the user that x km (electric range)/100 km (driving with ICE) is generated. When the driver chooses for the lowest active charging input-level, less electric energy will be regenerated using energy of the ICE. Therefore, full electric drive capability reduces, when the user of the PHEV does not charge the battery at a plug-in charging station.

In method step d) the calculated necessary active charging input-levels in step c) are compared for each segment to a pre-defined active charging input-range stored in the memory of the control device, wherein the pre-defined active charging input-ranges are at least a function of the allowable vehicle emission output. After calculation, that for certain segments a specific charging level is required at the beginning and during passing the segment, the calculated necessary levels are compared to pre-defined ranges. The pre-defined ranges can for instance include a certain amount of energy which has to be generated per travelled km within the segment. The admissible range can be set by the user, but has at least to include the generated emissions as a combination of the combustion engine emission and the emissions contributed to active charging. A possible emission range in zero emission zone can for instance be 0, because in zero emission zones generally no emission output is allowed. Therefore, the emission contribution originated from the active charging has to be zero. In addition to the allowable emission output, also other factors like the fleet policy or the (average) level of plug-in charging may be integrated. E.g. it is possible to set a limit to active regeneration based on the charging behavior of the driver. A model can be included, wherein the model fixes the overall amount of active charging. For instance, the active charging levels can be limited from 20% to 80 % SOC. This range can further be correlated to the vehicle power, for example 10 KWh. The comparison in the control device allows a maximum active regeneration of the power value multiplied by a factor. This correlation of SOC and power value will ensure, that when a user does not fully charge the vehicle at a (plug-in) charge station, its range will be halved in best conditions. Therefore, by properly using the range settings it is possible to change the emission window of the vehicle and adjust also the mind of the driver to the correct behavior, fully utilizing the optimized output of the hybrid vehicle. The pre-defined active charging input-range can for instance be defined by an upper and a lower limit and an in-between value, wherein the in-between value is usually chosen in standard conditions. The latter value can for instance be the average or the median of the upper and lower limit.

In method step e) the selected route alternative is followed in cases, wherein the calculated necessary active charging input-levels of all segments are within the limits of the pre-defined active charging input-ranges or an action is performed by the control device in cases, wherein segments are present, wherein the calculated necessary active charging input-level is not within the limits of the pre-defined active charging input-ranges, wherein the requested action is selected from the group consisting of planning of a different route, adapting the necessary active charging input-levels of segments prior to the out-of-range segment, adapting the pre-defined active charging input-range in the memory of the control device, electronically limiting the available vehicle torque output of the vehicle, output of a user information on a vehicle communication device, output of a user plug-in charging request on a vehicle communication device; platooning of several vehicles in one or more segments. The control device compares the calculated charging levels against the pre-set allowable ranges and a route alternative is considered in cases only, wherein the calculated levels are within the allowed ranges. In case that the actual considered path is not allowable, a different path comprising for instance different streets is considered. Therefore, an allowable path is based at least on the emission requirements in the segments and not necessarily only based on the travelled path length. In addition to switching to another route, it is possible that other options are selected from above given list. For instance, it is possible that the charging levels in segments prior to the "out of range" segment can be increased within the allowable range, so that the necessary energy can be generated beforehand, shifting the emissions to prior segments. Alternatively, it is possible to inform the driver about the mismatch and advise or request to change the driving behavior. Furthermore, it is possible that vehicles in the surrounding are paired or platooned and based on the energy saving by platooning, it is possible that the vehicle group may be allowed to travel certain segments, wherein it is not allowed for a single vehicle alone.

Within the inventive method the method steps b)-e) are at least performed more than once along the route from the start position to the final destination. In order to provide a proper data-base, wherein the control device can perform the calculation on the best available data-basis, it has been found useful, that the method is not only performed once at the beginning of the route. It has been found useful, that within the calculation comparison steps are performed more often, wherein the starting position is replaced by the actual position. It is preferred, that the above mentioned steps are repeated for instance as a function of time or as a function of travelled path length. A repetition frequency can be every 5 minutes, preferably every 2 minutes and even more preferred every minute. A suitable interval with respect to the travelled distance can be every 5 km, preferred every 2.5 km and even more preferred every kilometer. In addition, it is possible to constantly the parameters are recalculated and the planning is adjusted in cases, wherein a better alternative with respect to the emission status or fuel consumption is found.

In a preferred embodiment of the method the user inputs in step a) also a target for the active charging input-levels into the control device. For the generated emissions it has been found favorable, that the user also sets a targeted value for the charging input-levels. This input parameter may reduce the available amount of interdependencies between the different parameter and may help the control device to calculate the right route in a shorter period of time. In addition, the active input of this parameter may increase the driver awareness about the possible consequences in cases, wherein the real driving behavior deviates from the inputted (and wanted) driving behavior.

Within a preferred aspect of the method the upper-limits of the pre-defined active charging input-ranges can also be a function of the average plug-in charging level of the vehicle. Besides defining the allowable range of active charging by the emission output, only, it has been found favorable, that the average plug-in charging level is also included in the determination of the upper range limit. For instance, it is possible to broaden the possible active charging range in cases, wherein the hybrid vehicle battery is mainly charged by plug-in charging. In such situations higher active recharging levels can be helpful and can be allowed as an exception. This parameter combination may result in a lower emission rate considering more than one route, because it also takes into account a standard behavior of the vehicle driver. In addition, besides the overall lower emissions it might help to reduce the degree of wear of the tires and the combustion engine, because routes are now allowed, which were otherwise out of scope. Therefore, plug-in-charging is rewarded within the inventive method by real savings.

In another preferred characteristic of the method an average fleet emission threshold can be stored in the control device and the performed action in method step e) can include at least an output on the vehicle communication device that the actual emission status is above or below the average fleet emission threshold. An average fleet emission threshold can for instance be based on the same car type or an average based on the same motor type. In addition, it is possible to establish different categories, e.g. based on the same general or exhaust gas specific pollution behavior. Besides the different classes also company or other group dependent specific levels can be used for comparison. Based on the comparison it is possible to check whether or not the general pollution level of the car at hand is different compared to other, comparable cars. Therefore, it is possible to detect differences, either in the technical setup or in the driving behavior, on a much smaller level compared to more general parameter averages. In consequence, above or below average vehicles can be sent to a check-up or the driver can be alerted to change driving behavior. In consequence, the overall pollution level can be reduced.

Within a preferred aspect of the method the adaption of the necessary active charging input-levels of segments prior to the out-of-range segment in method step e) can include an increase of the active charging input-levels up to the upper limit of the pre-defined active charging input-range for one or more segments prior to the out-of-range segment. In cases, wherein the segment does not comprise any emission restriction, it is possible to choose a standard charging level, which can be the average or the median of the allowable charging range. This level might be the optimum with respect to pollution levels and charging characteristics in this segment. Nevertheless, if a segment of the actually planned route cannot be used, because the necessary level is out of scope of the pre-defined range, it can result in an overall lower emission of the route, that the optimum in the prior segments is not achieved, but it allows to cross the otherwise unavailable segment. Therefore, in average this embodiment enables shorter path lengths and lower vehicle emission outputs.

In a preferred embodiment of the method an upper and a lower limit of the pre-defined active charging input-range in zero-emission zones can be set to 0. In order to assure that the regulation requirements in emission restricted zones are met, it is possible to set both limits of the charging range to 0. Thereby, the segment in the emission restricted zones will not be crossed, unless there is no active charging of the battery by the combustion engine and, consequently, no emissions generated. This assures, that hybrid vehicles are able to cross such zones and emissions can be reduced, because otherwise hybrid vehicles have to find a different, presumably longer path.

Within a further preferred aspect of the method the storage medium in method step b) can be a cloud storage. It is favorable, that the storage device in step c) is a cloud storage. The cloud storage can be updated more often and it is an easy process to add further parameters to the already existing parameter-set and, thus, broaden the parameter base. In addition, it can be assured, that all hybrid vehicles in the surrounding share the same data-base and that the planning is performed on the same information about the side-conditions like traffic and weather. For instance, it is assured that the traffic situation is mirrored just by one data-set and all vehicles share the same base. Therefore, platooning for instance becomes more efficient. A further advantage can be, that the cloud server is regulated by an official third party. In these cases, it is possible to assure, that for instance in zero emission zones no hybrid vehicles will be presented, which are not able to provide zero emission when passing the zone or segment.

In another preferred embodiment of the method in a further method step f) a segment specific real-life actual active charging input-levels and the emission output can be stored in a storage device after the segment has been passed by the vehicle. For the inventive method it is of importance, that the included parameters like predicted possible charging rates and levels, distances, traffic conditions, road conditions are up to date and mirror the situation at hand. Therefore, it has been useful, to verify the database by a second database, only including measured real-life values. These data can be stored as a function of the single vehicle or can be collected for a larger group of hybrid vehicles. Consequently, the storage medium can be a common, e.g. cloud, storage medium or can be a storage medium in the vehicle. Based on the long-term real-life data averages it is possible to identify failures in the existing vehicle hardware. Such additional process step can increase the vehicle life-time and can help to further reduce emissions.

Within a preferred characteristic of the method the pre-defined active charging input-ranges stored in the memory of the control device can be adapted in a pre-defined time interval based on the average of the real-life actual active charging input-levels stored in the real-life storage device. In certain cases, it might be possible, that a holistic parameter approach will lead to an optimum in planning. Therefore, it is especially possible for the inventive method at hand to use the generated real-life charging data for an internal calibration routine with the pre-defined charging ranges. This may help to identify deviation in the hardware response of the vehicle at hand or might help to find mismatches in the street data.

In another preferred aspect of the method a plug-in charging threshold limit can be stored in the control device and the performed action in method step e) includes at least the limitation of the available vehicle torque output and a user plug-in charging request on a vehicle communication device in cases, wherein an average plug-in charging level is lower compared to the stored plug-in charging threshold limit. It has been found advantageous for the fuel consumption and the emission levels, that within the control device a function is implemented, forcing or rewarding plug-in charging. The first motivational charge function in the control device may reduce the combined power and or torque output of the hybrid drive-train when the user did not partly or fully charge the battery. For the vehicle this results in lower acceleration capabilities when driving in hybrid/full electric mode. A basic equation defining this function may be based on the following relationship

$$(\text{SoC plugin} \leq x * \text{SoC}) \Rightarrow (T\,e = T\,e,\text{max} * y)$$

wherein SoC plugin is the battery state of charge through plug-in charging, SoC is the battery state of charge, x is a percentage between 0% and 100%, T e is the limited available torque from the electric motor, T e,max is the maximum available torque from the electric motor and y is a percentage between 0% and 100%. The check-loop is actively monitored and controlled and can for instance be performed at the beginning of the vehicle starting phase, e.g. when the vehicle is turned on. With this principle the user of the vehicle directly feels the consequences of driving his/her vehicle without proper and environmentally friendly charging his/her PHEV using plug-in charging. Furthermore, it is possible to choose the parameters x and y in the control device. For example, x is chosen to be 85% and y is chosen to be 80%. This means, that if the vehicle is not charged above 85% using plug-in charging, the electric drive torque will be limited to 80% of the original torque. The parameters x and y can be tuned for less or more freedom around plug-in charging the vehicle. Next to that, the arguments of the provided conditional in above equation can be modified to include the active charging ratio as well.

In another preferred embodiment of the method the limits set by the control device can further be based on an emission prediction routine. As the user will be able to choose the amount of active regeneration, it is crucial to give the user so called limits in between he or she chooses the amount. The lower limit serves as the bare minimum amount of active regeneration that will still enable the driver and vehicle to perform the desired route. The upper limit serves as the maximum amount of active regeneration such that the vehicle is still compliant with the emission limits set by governmental authorities at that specific moment. Furthermore, external actors including but not limited to fleet owners and drivers can change the upper limit according to their preferences, of course always respecting the emission limits set by governmental authorities. To calculate those limits knowledge needs to be present about the emissions that a certain drive mode will induce. Therefore, previously obtained lab measurements, current live measurements and a prediction model are used. The previously obtained lab measurements include PM, CO2 and $NO_x$ at various operating modes of the vehicle. In such a way a lookup data structure is generated which can be used to predict the emissions of certain operation modes. This mainly includes but is not limited to the emissions of various operating modes where active regeneration is used. Next to that lab measurements give access to emission data such as PM, CO2 that would normally not be measurable using the on-board measurement equipment on the vehicle. In this way a prediction can be made on this data using a prediction model. The prediction model runs on the vehicle using a computing system and predicts all different types of emissions based on measurements conducted by the on-board sensor systems of the vehicle and the previously generated lookup data structure. It predicts emission data for both the directly non-measurable emissions (e.g. PM, CO2) as well as the emission data for different amounts of active regeneration (e.g. it can predict the amount of extra emissions should the vehicle switch to a drive- mode where electric energy is generated using the active regeneration principle).

Within a preferred embodiment of the inventive method the method can provide an emission control in a collective manner. Here the lower and upper bound can be regulated based on the vehicle information of a fleet of vehicles in a certain region. By taking into account all the information (including but not limited to route information, SoC, FM information, time schedules and input parameters given by external actors including but not limited to government agencies, fleet owners and regulators) of all vehicles in a certain area, a prediction can be made about the emission in a certain area. Knowing this, the upper bound of the vehicles can be adjusted to improve the air quality conditions in a certain area. For example, following from the route information of ten vehicles it appears that seven vehicles will be travelling the same path at the same time. In such a case the upper bound of those seven vehicles can be lowered to improve the air quality in that area. Next to that, the drivers of those vehicles could be notified that an alternative route is available. The latter situation mainly applies for vehicles that do not have sufficient SoC for the rest of their planned route. Those vehicles can then take an alternative route where the upper active regeneration limit is higher than the upper bound of the previously described typical route. A different approach is to promote the use of platooning in a certain area. The seven vehicles of the previous example could also be used to form a platooning fleet of vehicles, thereby reducing the emission and enabling the upper active regeneration bound to be increased. For this it is of importance that the vehicle data of each vehicle is communicated to a so-called vehicle data pool. The vehicle data include but is not limited to location, route information, emissions, active drive-mode, battery SoC and fleet management information. This information is wireless communicated per vehicle to a cloud database. In such a way the live data is continuously updated. An added option for the sharing of data can be inter vehicle communication using a wireless communication network.

It is further within the scope of the invention to disclose a control system adapted to perform the inventive method. The inventive system may comprise only vehicle on-board components or may comprise on-board as well as external components. The basic functions and the coordination of the overall method is provided by the control device, wherein the device comprises a memory, wherein in the memory there is a control data set comprising a plurality of control instructions, wherein the control instructions are configured, to cause the control device to execute at least the steps of the inventive method. Besides the control device, the control system may comprise a navigation module, a GPS-module, an external storage medium, a human machine interface for output of messages to the vehicle driver, and the electronic or hardware possibilities to regulate the battery charging behavior and the overall torque output of the vehicle. With respect to the advantages of the control device it is explicitly referred to the advantages of the inventive method.

Within a preferred embodiment of the control system the control system may further comprise a communication module, wherein the communication module is adapted to transmit vehicle emission levels to a third party. In order to increase the efficiency of the overall system it has been found useful to implement communication means, which are able to share all or certain data parts with third parties. A third party can for instance be a fleet management system, a municipal or a government authority. By sharing the data, it is possible to get a broader overview about hybrid vehicle performance and malfunctions of the vehicle can be identified by out-of-scope values compared to other vehicles. Furthermore, it is possible to establish an emission and/or driving behavior specific road charging system, wherein the charging system is based on the driving behavior including plug-in charging levels and not only based on a flat daily or distance dependent fee. The right driving behavior results in lower emission levels and such behavior can be detected and rewarded.

In another preferred aspect of the control system the control system may further comprise a communication module, wherein the communication module can be adapted to transmit at least the planned route and a request for platooning to other traffic participants in the surrounding of the vehicle. Such communication means can or instance include a 5G module. Based on the same travel direction and based on the knowledge about the charging status and the possibility to assure certain emission levels, it is very suitable to integrate the inventive method in a larger context by also considering and including other traffic participants. The other traffic participants may be hybrid vehicles, pure electric vehicles or conventional cars or busses. To also include these further participants may result in an even lower pollution or emission level compared to situations, wherein the single vehicle is considered, only.

In a further preferred embodiment of the control system the control system can be adapted to limit the energy consumption of electric based vehicle systems. It has been found useful for the overall achievable emission levels, that besides the power-train management the control system is also able to limit the overall energy consumption of the vehicle. Within this embodiment it is possible, to temporarily limit certain energy consumers like the heating or the air condition, to achieve in certain segments the right charging status for crossing the segment. This energy "reserve" may help to increase the available number of possible route alternatives and may, in addition, help to reduce the overall travelled distance from the starting point to the destination.

In addition, a hybrid vehicle comprising the control system according to the invention is within the scope of the invention. The inventive hybrid vehicle is able to drive in a more energy efficient way and is able to travel at a reduced emission level compared to state-of-the art hybrid vehicles. For the advantages of the inventive hybrid vehicle it is explicitly referred to the advantages of the inventive method and the advantages of the inventive system.

Further advantages and preferred embodiments of the invention are displayed and discussed in the figures below. It is explicitly outlined that the figures do show examples only and it is not intended that the scope of invention is in any way limited by those figures.

The figures show:

Fig. 1    a schematic flow chart of an embodiment of the inventive method;

Fig. 2    a schematic flow chart of an embodiment of a part of the inventive method;

Fig. 3    a schematic diagram of the AR-range settings of the inventive method;

Fig. 4    a schematic diagram of a possible embodiment of the inventive system;

Fig. 5    a schematic diagram of a preferred embodiment of the inventive method;

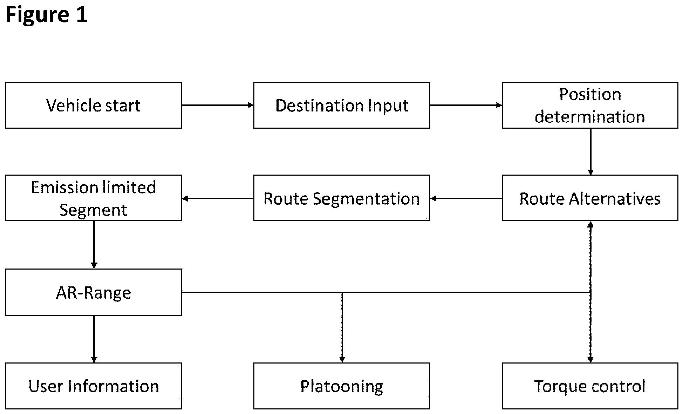

In Figure 1 a preferred embodiment of the inventive method is depicted. The method can be performed for hybrid vehicle comprising a combustion engine and a battery-operated electric engine. The method is directed to a route dependent charging control and is executed, at least in part in a control device and is inter alia able to control or limit the available torque output of the vehicle engines. At the vehicle start in method step a) the user inputs a destination. The destination may be inputted directly into the control device or into the memory of a navigation module, wherein the navigation module is connected to the control device. Based on the actual position different route alternatives are defined and evaluated from the actual position to the final destination. The actual position may be obtained by a GPS-module. The different, possible route alternatives are downloaded from a storage medium to the navigation module, wherein the storage device may be implemented in the control device or be a part of the memory of e.g. the navigation module. The route alternatives include possible pathways from the actual to the final position and in addition to the geographic coordinates of the streets at least also area specific pollution requirements. A single alternative is chosen from the group of possible routes and the chosen route is divided into segments, wherein the segmentation process is based at least on different pollution limits in the different areas, being passed from the start to the final destination. This process is repeated until at least one possible route is found or further actions may be performed, like informing the driver that no possible route is available without plug-in charging. Based on the different segment location and the segment extent a necessary active charging input-level for each route segment is calculated. The active charging is performed by the combustion engine and includes additional emissions. Based on the set emission levels in the different segments it may be the case, that certain segments allow no emissions or only a limited amount of emissions. In these cases, it may not be possible to generate extra electric energy by the combustion engine. Furthermore, it may be possible, that in certain segments the use of the combustion engine is not allowed at all. Based on the necessary level of active recharging, the battery charging state and further factors in can be calculated, whether or not the chosen route can be performed, taking the emission side conditions for the hybrid vehicle into account. Possible further side conditions may include one, two, three or for instance all factors of the group of travelled distance in the segment; actual and predicted battery charge status before entering the segment; location, extent and travel distance in emission-limited zones; location, extent and travel distance in zero-emission zones; traffic conditions; weather conditions; predicted overall route dependent pollution output; current and long-term plug-in charging level. Based on the calculation it can be decided by the control device, whether the calculated necessary of active re-charging can be achieved based on the route and if the route alternative is a good one, based on the AR-range and limits. If in one or more segments the necessary active re-charging is not allowed, it is possible to either plan or calculate a route alternative or to perform further actions like a user information, platooning of several cars and or restricting the available vehicle or engine torque. This evaluation can be performed more than ones in-between the route from the starting position to the final destination. Consequently, up-dated traffic or weather conditions or battery charging states can be included in the calculation.

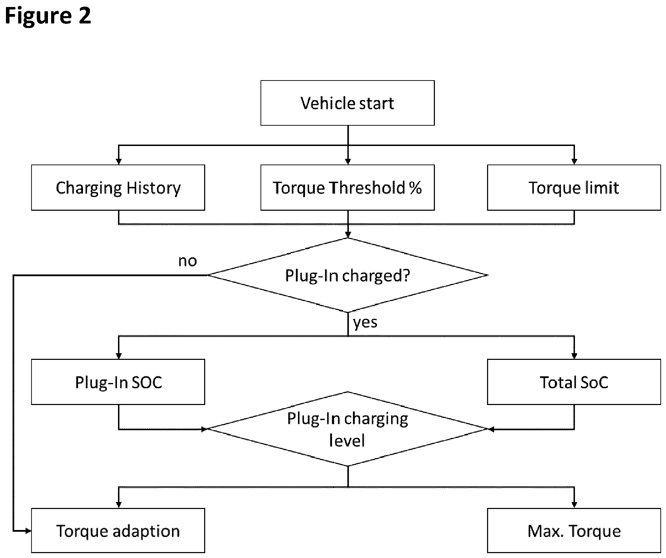

Figure 2 displays a further embodiment of the inventive method. It is displayed that the vehicle torque output can be adapted as a function of the vehicle battery charging history and torque related parameters. Based on the parameter, whether the vehicle is regularly plug-charged or not, parameter can be defined in the control device, such as a torque threshold value in % and a general torque limit in %, which can be used to control and regulate the driving behavior. The torque threshold value in % can for instance set a threshold value in the torque limitation, which can be applied to the system, based on the (average) plug-in charging levels. The second parameter may for instance include the amount of torque limitation compared to the maximum available torque output. One of the parameters may set an overall limit and the other parameter may include the relative level with respect to the absolute value. Based on the actual plug-in charge ratio the torque output may be restricted. Therefore, plug-in charging can be rewarded by a higher available torque output. A possible calculation method including the different parameter is for instance described in further detail above.

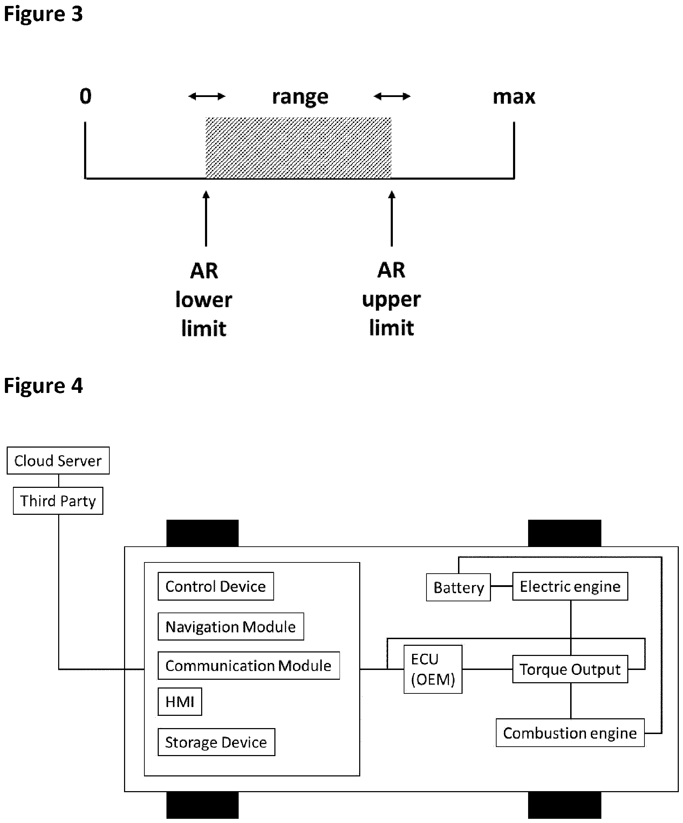

Figure 3 depicts a possible relation between an admissible active regeneration range in relation to the technically possible active regeneration limits. The necessary active charging input-levels of all segments have to be within the limits of the pre-defined active charging input-ranges. The latter range is adjustable and can, inter alia, depend upon the level of plug-in charging. The lower level of active battery re-charging can be 0 and in this case no energy is transferred into the battery by the combustion engine. The upper limit can be the maximum limit set by the vehicle hardware and in this case the battery is charged at the maximum possible charging limit. Within these boundaries the control device sets the limits for the allowable active charging limits, i.e. a lower limit and an upper limit. The lower bound may serve as the bare minimum amount of active regeneration that will still enable the driver and vehicle to perform the desired route. The hybrid system should guarantee that the driver and vehicle can perform their desired route as much as possible. This means that there is a minimum requirement to the amount of energy that actively regenerated. Using a prediction model the required energy can be calculated that needs to be generated in order for the vehicle to successfully complete its route. The prediction model takes into account various information including but not limited to state of charge (SoC), fleet management information, emission limits, route information and predicted emissions. The prediction model calculates the amount of electric energy required to travel the predefined route given by the route information. In this step emission limits on the route are taken into account (e.g. a waypoint on the route is located within a zero-emission-zone (ZEZ) and therefore the vehicle should be able to drive fully electric in this zone). The prediction of the required amount of electric energy is compared to the SoC of the vehicle. From this it is determined whether or not the vehicle should actively regenerate energy and if so, how much. This value is set as the lower bound. The value is continuously recalculated as the circumstances of the vehicle are bound to change. The upper bound serves as the maximum amount of active regeneration while the vehicle is still compliant with the emission limits set by governmental authorities at that specific moment (e.g. time based and/or location based). External actors including but not limited to fleet owners and drivers can change the upper limit according to their preferences, of course always respecting the emission limits set by governmental authorities. The hybrid system should guarantee that the vehicle never exceeds the emission limits that are active at that moment. Therefore, a maximum amount of active regeneration should be taken into account by the system. The system is constantly updated with the up-to-date emission limits governed by governmental authorities. This can be done over a wireless communication infrastructure or through a wired connection. The emission limits can have various forms (e.g. time based, location based etc.). Therefore, the system will be able to process all the different forms given by governmental authorities all over the world. For example, the governmental authority sets a $CO_2$ emission limit of 80 mg/km for a given region and the predefined route of the vehicle crosses that region. In such a situation, the system will adapt the upper bound of active regeneration when the vehicle enters the region where the emission limit is active such that the emissions do not exceed 80 mg/km when actively regenerating. In ZEZs the upper bound of active regeneration will therefore be equal to zero. The same principle holds for time-based emission limits. In such a situation the upper bound of active regeneration is adapted to the emission limit active in a certain time period when the vehicle is driving in that time period. Next to the emission limits set by governmental authorities, other external actors including but not limited to fleet owners and drivers can also set the upper bound. For example, a fleet manager of a company may be interested due to various reasons in setting his or her own emission limit in a certain area. Such an external emission limit is updated in the same way as the emission limits set by governmental authorities, thus by means of wireless or wired communication. The system running on the vehicle will always respect the emission limits set by the governmental authorities. For example, a governmental authority set a maximum $CO_2$ emission of 20 mg/km and an external actors set a value for the same emissions of 40 mg/km. In that situation the upper bound is set such that the vehicle does not exceed 20 mg/km.

Figure 4 shows a preferred embodiment of the inventive system. The system comprises a control device for the hybrid vehicle. The control device is able to control the charging level of the battery and, consequently, the electric energy generated by the combustion engine. Besides controlling and changing of the interplay between combustion engine and battery, the control device is, in addition, able to alter and control the torque output of the hybrid vehicle. The control device includes or is able to communicate with other modules, i.e. a navigation module, a communication module, an HMI (human machine interface) and a storage device. In addition, besides the communication with these on-board units the control device may further be able to communicate or exchange data with an external storage medium like a cloud server and third parties, like municipal or governmental authorities. Data can for instance be exchanged regarding the actual or historic emission status of the vehicle.

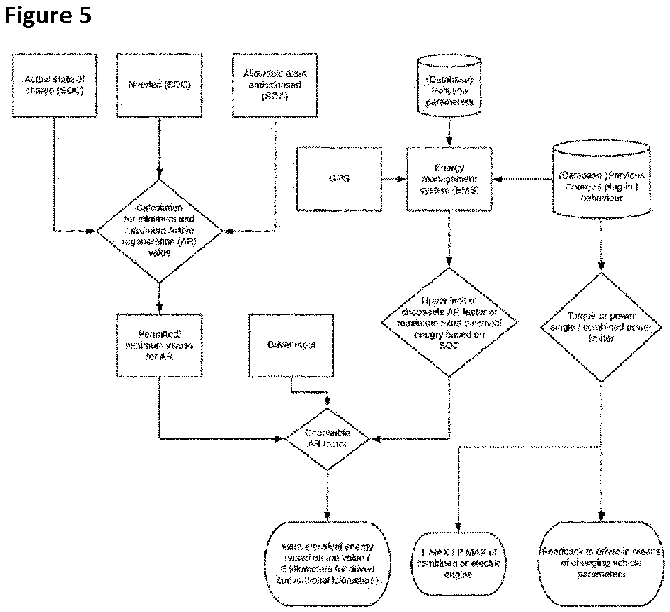

In Figure 5 a more complex interplay between the allowed level of active re-charging and other external factors is displayed. The core of this embodiment is the selection of the AR factors. The upper and lower AR-limits are based on the output of an energy management system including selected parameters like the historic driving behavior, pollution parameters and the GPS-position. In addition, actual vehicle parameters like the predicted needed SOC, the allowable emissions and the actual state of charge is used for the model. Based on this parameter aggregation the driver may also be able to influence the outcome of the method. Based on a calculated needed AR-amount and based on the calculated upper and lower limits it is possible to judge, whether or not the actual calculated path to the destination is allowed or not. If not, it is possible to choose a route alternative, limit the torque output or perform a re-planning, whether or not the critical segment can be crossed by changing the limits in other segments, prior to the critical segment.

## Claims

1. Method for a route dependent charging control of a hybrid vehicle comprising a combustion engine and a battery-operated electric engine, wherein the vehicle is equipped to actively re-charge the battery by utilization of the combustion engine power output, **characterized in that**, the method is performed at least in part in a control device, wherein the control device is equipped to adapt the active charging input into the battery by the combustion engine and equipped to adapt the available torque output of the vehicle engines and comprises a memory including instructions to perform at least the method steps of:

   a) user input of a destination at a vehicle start position into the memory of a navigation module;

   b) determination of the actual vehicle position by a positioning device and download of route alternatives starting from the actual position to the final destination from a storage medium to the navigation module, wherein in addition to the different route alternatives at least also the area specific pollution requirements are stored in the navigation module;

   c) segmentation of the route in the navigation module at least as a function of the area specific pollution requirements and calculation of a necessary active charging input-level for each route segment, wherein the necessary active charging input-level is calculated including one or more factors from the group consisting of travelled distance in the segment; actual and predicted battery charge status before entering the segment; location, extent and travel distance in emission-limited zones; location, extent and travel distance in zero-emission zones; traffic conditions; weather conditions; predicted overall route dependent pollution output; current and long-term plug-in charging level;

   d) comparison of the calculated necessary active charging input-level in step c) for each segment to a pre-defined active charging input-range stored in the memory of the control device, wherein the pre-defined active charging input-ranges are at least a function of the allowable vehicle emission output;

   e) based on the comparison outcome in step d), following the selected route alternative in cases, wherein the calculated necessary active charging input-levels of all segments are within the limits of the pre-defined active charging input-ranges or performing an action by the control device in cases, wherein segments are present, wherein the calculated necessary active charging input-level is not within the limits of the pre-defined active charging input-ranges, wherein the requested action is selected from the group consisting of planning of a different route, adapting the necessary active charging input-levels of segments prior to the out-of-range segment, adapting the pre-defined active charging input-range in the memory of the control device, electronically limiting the available vehicle torque output of the vehicle, output of a user information on a vehicle communication device, output of a user plug-in charging request on a vehicle communication device; platooning of several vehicles in one or more segments; wherein the method steps b)-e) are at least performed more than once along the route from the start position to the final destination.

2. Method according to claim 1, wherein the user in step a) also inputs a target for the active charging input-levels into the control device.

3. Method according to any one of the preceding claims, wherein the upper-limits of the pre-defined active charging input-ranges are also a function of the average plug-in charging level of the vehicle.

4. Method according to any one of the preceding claims, wherein an average fleet emission threshold is stored in the control device and the performed action in method step e) includes at least an output on the vehicle communication device that the actual emission status is above or below the average fleet emission threshold.

5. Method according to any one of the preceding claims, wherein the adaption of the necessary active charging input-levels of segments prior to the out-of-range segment in method step e) includes an increase of the active charging input-levels up to the upper limit of the pre-defined active charging input-range for one or more segments prior to the out-of-range segment.

6. Method according to any one of the preceding claims, wherein the upper and lower limit of the pre-defined active charging input-range in zero-emission zones is set to 0.

7. Method according to any one of the preceding claims, wherein the storage medium in method step b) is a cloud storage.

8. Method according to any one of the preceding claims, wherein in a further method step f) a segment specific real-life actual active charging input-level and the emission output are stored in a storage device after the segment has been passed by the vehicle.

9. Method according to claim 8, wherein the pre-defined active charging input-ranges stored in the memory of the control device are adapted in a pre-defined time interval based on the average of the real-life actual active charging input-levels stored in the real-life storage device.

10. Method according to any one of the preceding claims, wherein a plug-in charging threshold limit is stored in the control device and the performed action in method step e) includes at least the limitation of the available vehicle torque output and a user plug-in charging request on a vehicle communication device in cases, wherein an average plug-in charging level is lower compared to the stored plug-in charging threshold limit.

11. Control system adapted to perform the method according to any one of claims 1-10.

12. Control system according to claim 11, wherein the control system further comprises a communication module, wherein the communication module is adapted to transmit vehicle emission levels to a third party.

13. Control system according to any one of claims 11 or 12, wherein the control system further comprises a communication module, wherein the communication module is adapted to transmit at least the planned route and a request for platooning to other traffic participants in the surrounding of the vehicle.

14. Control system according to any one of claims 11 to 13, wherein the control system is adapted to limit the energy consumption of electric based vehicle systems.

15. Hybrid vehicle, comprising a control system according to any one of claims 11 to 14.

# Figure 1

```
┌─────────────────┐     ┌─────────────────┐     ┌─────────────────┐
│  Vehicle start  │ ──> │ Destination Input│ ──> │    Position     │
│                 │     │                 │     │  determination  │
└─────────────────┘     └─────────────────┘     └─────────────────┘
                                                         │
                                                         v
┌─────────────────┐     ┌─────────────────┐     ┌─────────────────┐
│ Emission limited│ <── │ Route Segmentation│ <─ │ Route Alternatives│
│     Segment     │     │                 │     │                 │
└─────────────────┘     └─────────────────┘     └─────────────────┘
         │                                               ^
         v                                               │
┌─────────────────┐                                      │
│    AR-Range     │ ─────────────────────┬───────────────┤
└─────────────────┘                      │               │
         │                               │               │
         v                               v               v
┌─────────────────┐     ┌─────────────────┐     ┌─────────────────┐
│ User Information│     │   Platooning    │     │  Torque control │
└─────────────────┘     └─────────────────┘     └─────────────────┘
```

# Figure 2

```
                          ┌─────────────────────┐
                          │    Vehicle start    │
                          └─────────────────────┘
                                    │
        ┌───────────────────────────┼───────────────────────────┐
        ▼                           ▼                           ▼
┌─────────────────┐      ┌─────────────────────┐      ┌─────────────────┐
│ Charging History│      │  Torque Threshold % │      │   Torque limit  │
└─────────────────┘      └─────────────────────┘      └─────────────────┘
        │                           │                           │
        │                           ▼
   no   │                    ╱─────────────╲
 ◄──────┤                   ╱  Plug-In charged? ╲
        │                   ╲                ╱
        │                    ╲──────────────╱
        │                           │ yes
        │                           ▼
        │    ┌─────────────┐                   ┌─────────────┐
        │    │  Plug-In SOC│                   │   Total SoC │
        │    └─────────────┘                   └─────────────┘
        │           │        ╱──────────────╲         │
        │           └──────►╱ Plug-In charging ╲◄──────┘
        │                   ╲     level       ╱
        │                    ╲──────────────╱
        │                           │
        ▼                           ▼
┌─────────────────┐         ┌─────────────────┐
│ Torque adaption │         │   Max. Torque   │
└─────────────────┘         └─────────────────┘
```

**Figure 3**

0      ←→    range    ←→     max

AR
lower
limit

AR
upper
limit

**Figure 4**

Cloud Server

Third Party

Control Device

Navigation Module

Communication Module

HMI

Storage Device

Battery

Electric engine

ECU
(OEM)

Torque Output

Combustion engine

## Figure 5

Europäisches Patentamt

European Patent Office

Office européen des brevets

**EUROPEAN SEARCH REPORT**

Application Number

EP 19 21 9011

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 815 824 A (SAGA KENICHI [JP] ET AL) 29 September 1998 (1998-09-29) * column 2, line 59 - column 3, line 13 * * column 5, line 42 - column 6, line 44 * * column 10, line 46 - column 12, line 65 * * column 11, line 38 * * column 13, line 53 - column 15, line 38 * ----- | 1,2,6-8, 12,14,15 | INV. G01C21/34 B60W20/00 |
| X | US 2007/294026 A1 (SCHIRMER HARTMUT [DE]) 20 December 2007 (2007-12-20) * paragraphs [0026] - [0033]; figures 3,4 * ----- | 1,11,15 | |
| A | DE 10 2013 225558 A1 (VOLKSWAGEN AG [DE]) 11 June 2015 (2015-06-11) * paragraphs [0017] - [0026], [0037] - [0040], [0049], [0054] - [0062], [0071], [0072] * * figures 3,4 * ----- | 1-15 | |
| A | EP 3 480 076 A1 (HYUNDAI MOTOR CO LTD [KR]; KIA MOTORS CORP [KR]) 8 May 2019 (2019-05-08) * paragraphs [0011], [0012], [0022] - [0026], [0054], [0067] - [0070], [0077], [0078], [0091] - [0093] * ----- | 1-15 | TECHNICAL FIELDS SEARCHED (IPC) G01C B60W |

The present search report has been drawn up for all claims

| Place of search | Date of completion of the search | Examiner |
|---|---|---|
| The Hague | 9 June 2020 | Bruinsma, Maarten |

**ANNEX TO THE EUROPEAN SEARCH REPORT
ON EUROPEAN PATENT APPLICATION NO.**

EP 19 21 9011

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2020

| Patent document cited in search report | | Publication date | Patent family member(s) | | Publication date |
|---|---|---|---|---|---|
| US 5815824 | A | 29-09-1998 | JP | 3264123 B2 | 11-03-2002 |
| | | | JP | H08240435 A | 17-09-1996 |
| | | | US | 5815824 A | 29-09-1998 |
| US 2007294026 | A1 | 20-12-2007 | AT | 441561 T | 15-09-2009 |
| | | | EP | 1842758 A1 | 10-10-2007 |
| | | | JP | 2007276761 A | 25-10-2007 |
| | | | US | 2007294026 A1 | 20-12-2007 |
| DE 102013225558 | A1 | 11-06-2015 | CN | 105992720 A | 05-10-2016 |
| | | | CN | 110758377 A | 07-02-2020 |
| | | | DE | 102013225558 A1 | 11-06-2015 |
| | | | EP | 3079962 A1 | 19-10-2016 |
| | | | EP | 3333036 A1 | 13-06-2018 |
| | | | WO | 2015086227 A1 | 18-06-2015 |
| EP 3480076 | A1 | 08-05-2019 | CN | 109747630 A | 14-05-2019 |
| | | | EP | 3480076 A1 | 08-05-2019 |
| | | | KR | 20190049143 A | 09-05-2019 |
| | | | US | 2019126907 A1 | 02-05-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102008008238 A1

- US 2005021191 A1